# EUROPEAN PATENT APPLICATION

(11) **EP 1 892 434 A2**
(43) Date of publication of application: **27.02.2008**
(21) Application number: 07114541.1
(22) Date of filing: 17.08.2007
(51) Int. Cl.: F16D 65/12

(54) **Flexibly mounted disc brake rotor for pneumatic, electromotive, and/or hydraulic disc brakes**

(30) Priority: 24.08.2006 US 508836
(71) Applicant: Bendix Spicer Foundation Brake LLC, Elyria, OH 44035 (US)
(72) Inventor: Clark, James R., Plainwell, MI 49080 (US); Hendershot, J. Alan, Schoolcraft, MI 49087 (US)
(74) Representative: Dantz, Jan Henning

(57) **Abstract**

A disc brake rotor (20) includes at least one friction ring (24) having a friction surface (32) adapted for contact with a brake pad during braking, and an annular mounting portion (50) by which the rotor is attachable to a hub (46). A connection permitting radial expansion and contraction of the friction ring (22,24) relative to the mounting portion (50) upon heating and cooling of the rotor is present between the friction ring and the mounting portion (50). This connection helps to resist cracking and subsequent failure of the rotor near its attachment to a hub.

## Description

### BACKGROUND OF THE INVENTION

### Field of the Invention

The present invention is usable in connection with disc brakes, and possibly with certain types of drum brakes, and is intended to produce a stress reduction, similar to that provided by a splined disc. Typically, as a rotor for a brake actuated pneumatically, electromotively, and/or hydraulically heats up under braking action, the flat portion or mounting ring of the rotor is subjected to stresses due to its mechanical attachment to the hub, near the center of the rotor mounting ring. These stresses can ultimately lead to cracking and subsequent failure of the rotor under certain loading conditions.

### Description of Related Art

U.S. Patent 6,321,885 to Wendt discloses a composite casting process for producing brake elements including hub and disc portions. A material union is provided between two different cast iron materials, which are chosen so that the hub portion is resistant to thermal shocks and the brake portion has high tensile strength.

U.S. Patent 6,357,561 to Ruiz discloses a brake rotor assembly using bushings in pin locations where the rotor is affixed to a hub. The bushings are made of a material with a hardness between that of the rotor and that of drive pin material, and are shaped so that they will remain securely in holes prepared in the rotor. Each bushing includes a slot permitting the rotor to radially expand and contract due to temperature changes and preventing deformation of the rotor caused by drive pin compressive forces during braking.

It is, moreover, known to combine a steel center and an iron outer ring.

### SUMMARY OF THE INVENTION

It is one object of the present invention to provide an improved rotor which allows for radial expansion of a cast iron rotor or a cast iron portion of a rotor under braking action with significantly reduced stresses being introduced to the typically brittle iron rotor or rotor portion.

The objects of the invention are achieved by the subject matter of claims 1, 17 and 23. Preferred embodiments are the subject matter of the subclaims. The object is achieved according to the present invention by way of a rotor for a disc brake including a connection between at least one friction ring having a friction surface adapted for contact with a brake pad during braking and an annular mounting portion by which the rotor is attachable to a hub, which permits radial expansion and contraction of the friction ring relative to the mounting portion upon heating and cooling of the rotor. The mounting portion may include stress-relieving notches defined therein or be split to facilitate radial expansion and contraction.

The connection may include circumferentially disposed tabs extending from the mounting portion with ends cast into the iron friction ring. The friction ring may be one of a pair of interconnected friction rings. In this instance, the connection may include a first set of circumferentially disposed tabs extending from the mounting portion with ends cast into one of the pair of friction rings, and a second set of circumferentially disposed tabs extending from the mounting portion with ends cast into the other of the pair of friction rings. Each tab preferably has an "S" or a "Z" shaped cross section. The uniqueness, in this configuration, resides, *inter alia,* in the leg or tab configuration of the design.

In other embodiments, the connection may include elements interconnecting the friction rings as well as slots, formed in a mounting ring, defining the annular mounting portion. The connecting elements in these embodiments are slidable in the slots to accommodate friction ring expansion and contraction. The mounting ring could additionally include a bend further facilitating such radial expansion and contraction.

In various embodiments of the invention, the friction ring is formed of cast iron, and both the annular mounting portion and the connection are formed of steel. Optimally, a steel ring or other, similar flexible material is used as a rotor mount and, again, is integrally cast into the iron portion of the rotor. By appropriate shaping of the ring and by the more flexible nature of steel versus the brittle nature of cast iron, radial expansion of the cast iron rotor portion with significantly lower induced stresses is permitted.

It is also contemplated, however, to utilize an all-cast-iron version of the invention, in which the friction ring, the mounting portion, and the connection are formed integrally of cast iron. In this version, a thin ring of cast iron is shaped to relieve stresses by permitting radial growth or expansion of the rotor ring through flexing of the thin section. It is more difficult to solve the cracking and failure problems mentioned in this way, due to the brittle nature of cast iron. However, one solution for the connection here is, for example, to define the connection by a thin deformable portion of the rotor having at least one recurved or serpentine section.

Optimum performance of the steel mounting ring would result when it contains bends that are non-radial to the centerline of the rotor. These portions of the mounting ring would flex as the rotor expands outward. Splitting the mounting ring would additionally assist the ring in expanding with a minimum of induced stress.

A steel plate is more flexible than cast iron portions of the rotor, allowing those cast iron rotor portions to expand radially. The internal spider could additionally be pre-stressed in a radially inward direction prior to casting of the friction discs.

Certain aspects of the steel portion of the rotor are considered noteworthy. First, the steel portion may be notched or slotted as mentioned so that the legs are more free to deflect as compared to a design having a solid center. Second, the legs may extend from the mounting face to essentially the farthest portion of the iron ring, providing a maximum distance allowing more tab or arm deflection.

Advantages provided by the invention include less stress cracking of the rotor at the mechanical point of attachment, radial friction disc displacement during heating without significant "coning," lower weight and cost, and less heat transmission to nearby bearings.

Other objects, advantages and novel features of the present invention will become apparent from the following detailed description of the invention when considered in conjunction with the accompanying drawings.

### BRIEF DESCRIPTION OF THE DRAWINGS

Figure 1 is a part sectional side view of a hub-mounted disc brake rotor including a mounting or attachment portion of flexible material according to a first embodiment;

Figure 2 is a view of a section of the rotor of Figure 1 as seen in the direction of arrow II;

Figure 3 is a view of a hub-mounted rotor similar to Figure 1 but showing a modified version of the mounting or attachment portion;

Figure 4 is a view of a section of the rotor of Figure 3, from its outboard side, similar to the view of Figure 2 but somewhat enlarged;

Figure 5 is a perspective view of a mounting ring of another embodiment of the invention prior to integration with rotor friction rings during friction ring casting;

Figure 6 is a perspective view of a rotor incorporating the mounting ring shown in Figure 5;

Figure 7 is a sectional side view of another embodiment of the invention in which a rotor mounting ring is formed as a flat disc;

Figure 8 a sectional view as seen along line VIII-VIII of Figure 7;

Figure 9 is a sectional side view similar to Figure 7 but of another embodiment in which the mounting ring includes a deformation or bend; and

Figure 10 is a part sectional side view of a hub-mounted disc brake rotor composed entirely of cast iron or another relatively brittle material according to the invention.

### DETAILED DESCRIPTION OF THE DRAWINGS

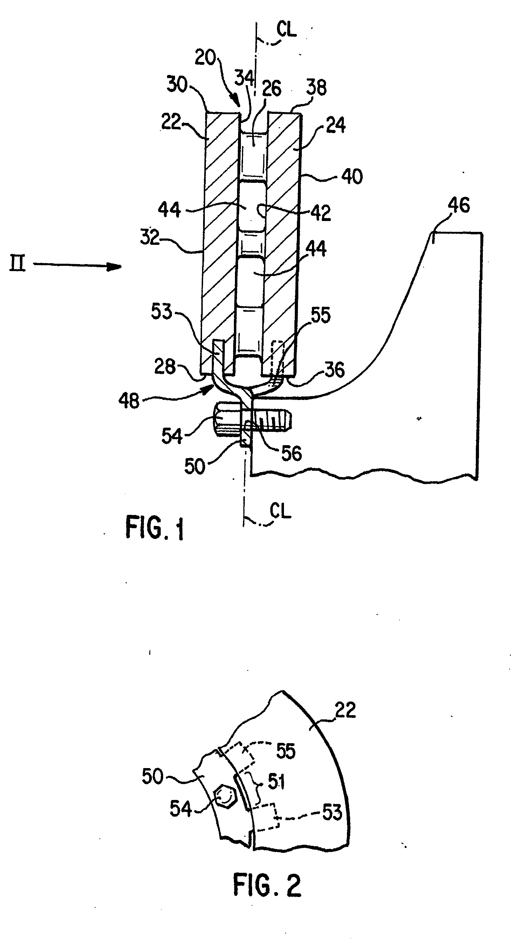

Figure 1 illustrates a ventilated disc brake rotor 20 including a first, outboard friction ring 22, a second, inboard friction ring 24, and ribs, vanes, pins, or other elements 26 interconnecting the friction rings 22 and 24. For typical applications, the friction rings 22 and 24 and the elements 26 are composed of a material such as cast iron. The outboard friction ring 22 includes a radially inner side 28, a radially outer side 30, a friction surface 32, and another surface 34 facing the inboard friction ring 24. The inboard friction ring 24 similarly includes a radially inner side 36, a radially outer side 38, a friction surface 40, and another surface 42 facing the outboard friction ring 22. Ventilation spaces 44 are defined between the facing surfaces 34 and 42 of the friction rings to provide for cooling during brake operation. While the ring 22, the ring 24, and the elements 26 may be produced separately and subsequently joined together, it is expedient to form the rings 22, 24, and the elements 26 of the rotor integrally as a one-piece, cast iron element.

In each embodiment of the present invention, the rotor is connected to a wheel hub in a manner which permits thermal rotor expansion without the typical problems relating to rotor cracking and failure. According to the first embodiment of the invention shown in Figures 1-2, this is accomplished by providing the rotor 20 with a hub mounting or attachment portion of flexible material that is actually cast into the rotor friction rings 22 and 24. Figures 1 and 2 show a mounting ring 48 of steel or other, similar flexible material as interposed between the friction rings 22, 24 and the wheel hub 46. The ring 48 is secured to the hub 46 by way of bolts 54 passing through bores 56 defined in an annular mounting portion 50, and includes a plurality of axially, circumferentially, and radially extending tabs, legs, or flanges 53 and 55 (hereinafter referred to as tabs for simplicity) formed at the radial outer portion of the annular mounting portion 50. Adjacent tabs are spaced from each other by a circumferential distance 51, which may be variable, if desired. The ends of the tabs 53 and 55 are connected by casting to the rest of the rotor 20, with the end of each tab 53 cast into the outboard friction ring 22 and the end of each tab 55 cast into the inboard friction ring 24. The flanges 53 and 55 may alternate with respect to one another around the circumference of the ring 48 or, if considered appropriate, may be provided in other patterns such as alternating pairs of flanges 53, 53 and 55, 55.

The construction illustrated in Figures 1 and 2 minimizes adverse effects produced by radial expansion due to heat generated when the rotor 20 is subjected to braking forces upon engagement of brake pads (not shown) with the friction surfaces 32 and 40. Significant flexibility is provided to the ring 48 by way of the material, such as steel, from which the ring is constructed as well as by way of the "S" or "Z" shape of the tabs 53 and 55 by which the annular mounting portion 50 is fastened to the rest of the rotor 20. Improved performance of the steel mounting ring 48 is provided by including portions, such as the bends in tabs 53 and 55 shown in Figure 1, that are not aligned with a rotor centerline CL and thus are non-radial with respect to the friction rings of the rotor 20. These portions of the mounting ring can flex as the rotor 20 expands outward. The flexibility provided by both using steel or other resilient material rather than relatively brittle cast iron as the hub mounting or attachment portion of the rotor 20 and shaping the tabs 53 and 55 of the ring 48 as described serves to significantly reduce stresses to which the rotor is subjected and thus resists the cracking and failure problems mentioned.

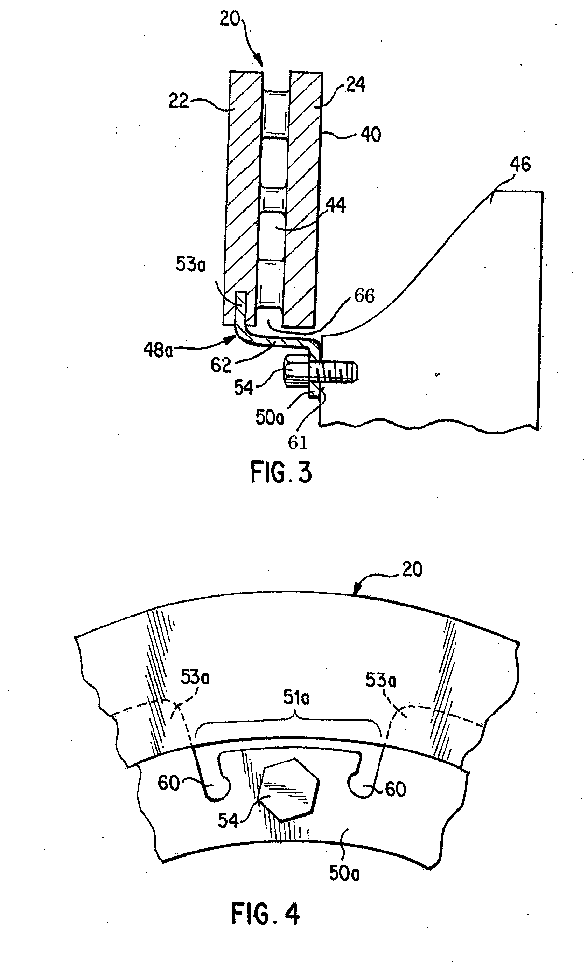

A modified version of the mounting ring interposed between the friction rings 22, 24 and the wheel hub 46 is shown in Figures 3 and 4 and is identified by reference number 48a. The ring 48a includes tabs 53a having ends cast into the outboard friction ring 22 only, and does not have tabs cast into the inboard friction ring 24. Again, adjacent tabs are spaced from each other by a circumferential distance 51a, which may be variable, if desired. The annular mounting portion 50a of this mounting ring 48a includes notches 60 extending radially in that mounting portion. The notches, as illustrated in Figure 4, extend on opposite sides of at least one bore through which at least one of the bolts 54 extends. Such notches provide stress relief to the ring 48a during radial, circumferential, or both radial and circumferential expansion of the rotor 20 and thus of the ring 48a itself. The ring 48a is made flexible and resilient, in a manner similar to the ring 48, by way of the material, such as steel, from which the ring 48a is constructed and by way of the "S" or "Z" shape of the tabs 53a by which the annular mounting portion 50a is fastened to the outboard friction ring 22.

As illustrated in Figure 3, an inboard surface 61 of the mounting portion 50a is roughly aligned with the friction surface 40 of the inboard friction ring 24, and each intermediate portion 62 of the tabs 53a extends from the mounting portion 50a past the radial interior end or portion 66 of each ventilation space 44. As in the previously described embodiment, the ring 48a of steel or other flexible material accommodates expansion of the rotor due to heat generated during braking by flexing. The rotor 20 is thus subjected to reduced stress, and the relatively brittle friction ring portions of the rotor can radially expand without the cracking and failure problems mentioned above.

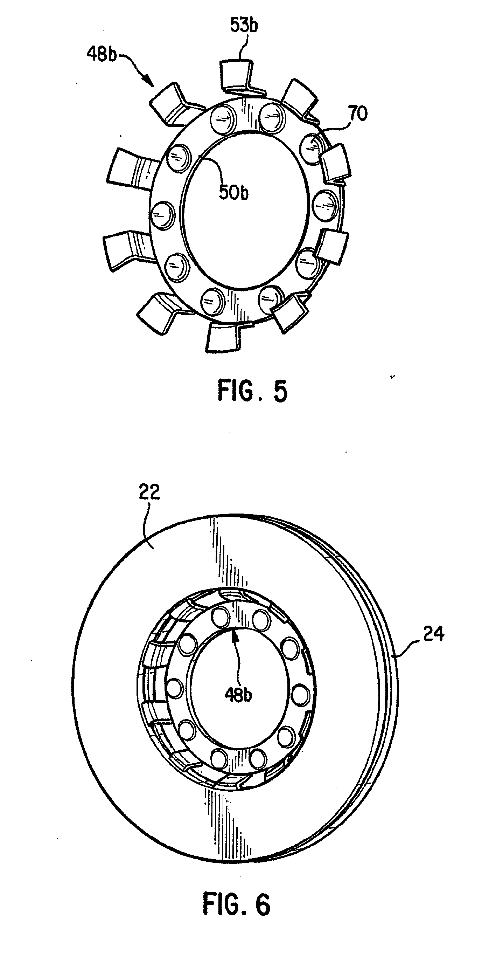

Figure 5 is a perspective view of a mounting ring 48b prior to integration with rotor friction rings during friction ring casting. The mounting ring 48b is similar to the mounting ring 48a shown in Figures 3 and 4 except that the ring 48b does not include stress relief notches. The mounting ring 48b of Figure 5 is also shown prior to formation of bores in its annular mounting portion 50b. This mounting portion 50b may include indentations 70 as shown to aid in bore location. The ring 48b shown in Figure 5 includes tabs 53b having ends which are to be cast into the outboard friction ring only, and does not have tabs which are to be cast into the inboard friction ring. Again, adjacent tabs can be spaced from each other by a circumferential distance which may be variable, if desired. Figure 6 provides a perspective view of the mounting ring 48b of Figure 5 after integration with the rotor friction rings 22 and 24 during casting of those rings.

Each of the embodiments described thus far features advantages resulting from radial friction disc displacement without significant "coning," low weight, low cost, and low heat transmission to wheel hub bearings. The embodiment shown in Figures 1-2 may also have notches such as those mentioned, and any of the embodiments described may so far may have a mounting portion which is split so as to facilitate radial expansion and contraction of the friction ring or rings.

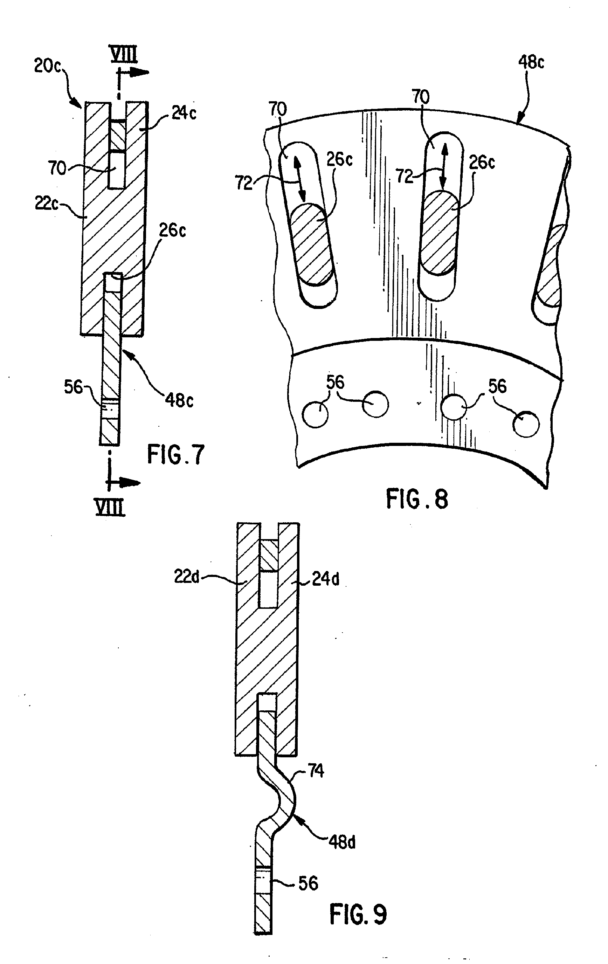

Figures 7 and 8 illustrate another embodiment of the invention providing an alternative to incorporating bends in a rotor mounting ring. The rotor 20c of this embodiment includes a first friction ring 22c, a second friction ring 24c, and elements 26c interconnecting the friction rings 22c and 24c. In this embodiment, the mounting ring 48c may be formed as a flat disc, without bends or tabs, due to the manner in which the mounting and friction rings are joined together.

As best seen in Figure 8, the mounting ring 48c is formed or provided with oblong slots or apertures 70 defined therein. These apertures 70 are dimensioned so as to permit elements 26c interconnecting the rotor friction rings to pass therethrough with essentially no circumferential clearance but with a certain degree of radial clearance. As a result, the rotor 20c is constrained from moving circumferentially with respect to the mounting ring 48c, but is permitted to radially expand relative to the mounting ring by way of a sliding connection, permitting relative radial sliding movement in the direction indicated by arrows 72, between the elements 26c and the mounting ring 48c. As in the embodiments described previously, bores 56c are defined in the annular mounting portion of the mounting ring so that the ring can be secured to a hub (not shown).

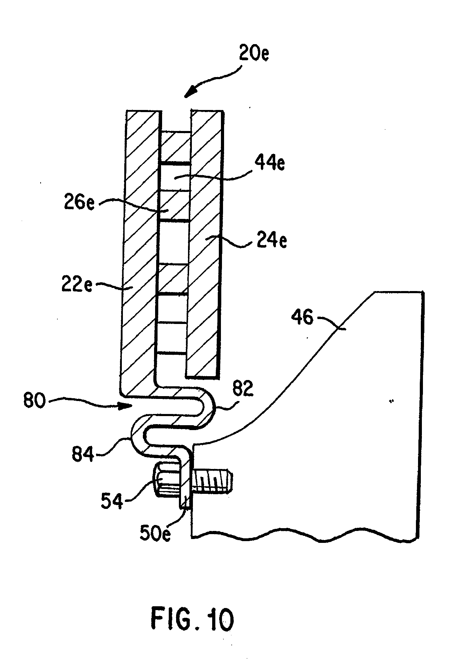

Figure 9 is a view of an embodiment similar to that shown in Figures 7 and 8 but in which the mounting ring 48d is provided with a deformation or bend 74 further facilitating radial expansion and contraction of the friction rings of the rotor 20d. Upon radial expansion of the friction rings 22d, 24d and the elements connecting those rings, the bend 74 can resiliently deform or flatten to further accommodate rotor expansion. It is possible, of course, to use the mounting ring 48d together with a solid or ventilated rotor having a friction ring or friction rings rigidly, rather than slidably, secured to the mounting ring 48d. Such a configuration, for example, could be one in which the mounting ring is connected during casting to the friction ring or rings in a manner similar to the embodiments of Figures 1-4.

It is also contemplated to provide a rotor composed entirely of cast iron or another relatively brittle material which is configured in such a way as to minimize stresses induced in the rotor, although it would be more difficult to solve the rotor cracking and failure problems discussed with this approach due to the brittle nature of the cast iron or other material. Figure 10 illustrates one embodiment of a rotor configured so as to minimize stresses due to brake-generated heat. The rotor 20e shown in Figure 10 includes a first, outboard friction ring 22e, a second, inboard friction ring 24e, and ribs, vanes, pins, or other elements 26e interconnecting the friction rings 22e and 24e. As in embodiments described previously, ventilation spaces 44e are defined between facing surfaces of the friction rings to provide for cooling during brake operation. To connect the rotor 20e to a wheel hub 46 in a manner which permits thermal rotor expansion without the problems relating to rotor cracking and failure mentioned previously, the rotor 20e has an integrally formed, thin deformable portion 80 which is shaped so as to relieve stresses on the rotor by permitting radial expansion. The deformable portion 80, for example, may include one or more recurved or serpentine sections to facilitate radial rotor expansion. The thin deformable portion 80 shown in Figure 10, for example, includes first and second recurved or serpentine sections 82 and 84 which, together, provide the overall deformable portion with a roughly "S" shaped cross section. The deformable portion 80 could alternatively be formed of separate individual legs having such "S" shaped cross sections. The deformable portion 80, as shown, is integrally cast or otherwise formed with the friction rings 22e and 24e and the elements 26e, and terminates in an annular mounting portion 50e at which the rotor 20e is secured to the hub 46 by way of bolts 54.

The foregoing disclosure has been set forth merely to illustrate the invention and is not intended to be limiting. Since modifications of the disclosed embodiments incorporating the spirit and substance of the invention may occur to persons skilled in the art, the invention should be construed to include everything within the scope of the appended claims and equivalents thereof.

## Claims

1. A rotor for a disc brake comprising:
at least one friction ring including a friction surface adapted for contact with a brake pad during braking;
an annular mounting portion by which the rotor is attachable to a hub; and
a connection between the friction ring and the mounting portion permitting radial expansion and contraction of the friction ring relative to the mounting portion upon heating and cooling of the rotor.

2. The rotor according to claim 1, wherein the mounting portion is a steel mounting portion, and wherein the connection includes circumferentially disposed steel tabs extending from the mounting portion with ends cast into the friction ring.

3. The rotor according to claim 1, wherein the friction ring is one of a pair of interconnected friction rings.

4. The rotor according to claim 3, wherein the mounting portion is a steel mounting portion, and wherein the connection includes a first set of circumferentially disposed tabs extending from the mounting portion with ends cast into one of the pair of friction rings and a second set of circumferentially disposed tabs extending from the mounting portion with ends cast into the other of the pair of friction rings.

5. The rotor according to claim 2, wherein each tab has an "S" or a "Z" shaped cross section.

6. The rotor according to claim 4, wherein each tab has an "S" or a "Z" shaped cross section.

7. The rotor according to claim 1, wherein the mounting portion includes stress-relieving notches defined therein.

8. The rotor according to claim 1, wherein the mounting portion is split to facilitate said radial expansion and contraction.

9. The rotor according to claim 3, wherein the connection includes elements interconnecting the friction rings as well as slots, formed in a steel mounting ring including said annular mounting portion, within which said elements are slidable.

10. The rotor according to claim 9, wherein the mounting ring includes a bend further facilitating radial expansion and contraction of the friction rings.

11. The rotor according to claim 1, wherein the friction ring, the mounting portion, and the connection are integrally formed of cast iron.

12. The rotor according to claim 11, wherein the connection is defined by a deformable portion of the rotor having at least one recurved section.

13. The rotor according to claim 1, wherein the friction ring is formed of cast iron and both the annular mounting portion and the connection are formed of steel.

14. The rotor according to claim 13, wherein the connection is pre-stressed in a direction to reduce stress as the friction ring expands during heating.

15. The rotor according to claim 14, wherein the connection is pre-stressed in a radially inward direction before the friction ring is cast.

16. The rotor according to claim 1, wherein the connection includes a bend facilitating radial expansion and contraction of the friction rings.

17. A wheel hub having a rotor for a disc brake mounted thereon, the rotor comprising:
at least one friction ring including a friction surface adapted for contact with a brake pad during braking;
an annular mounting portion by which the rotor is attachable to a hub; and
a connection between the friction ring and the mounting portion permitting radial expansion and contraction of the friction ring relative to the mounting portion upon heating and cooling of the rotor.

18. The wheel hub according to claim 17, wherein the mounting portion is a steel mounting portion, and wherein the connection includes circumferentially disposed steel tabs extending from the mounting portion with ends cast into the friction ring.

19. The wheel hub according to claim 17, wherein the friction ring is one of a pair of interconnected friction rings.

20. The wheel hub according to claim 19, wherein the mounting portion is a steel mounting portion, and wherein the connection includes a first set of circumferentially disposed tabs extending from the mounting portion with ends cast into one of the pair of friction rings and a second set of circumferentially disposed tabs extending from the mounting portion with ends cast into the other of the pair of friction rings.

21. The wheel hub according to claim 18, wherein each tab has an "S" or a "Z" shaped cross section.

22. The wheel hub according to claim 20, wherein each tab has an "S" or a "Z" shaped cross section.

23. A rotor for a disc brake comprising:
at least one friction ring including a friction surface adapted for contact with a brake pad during braking;
an annular mounting portion by which the rotor is attachable to a hub; and
joining means for joining the friction ring and the mounting portion permitting radial expansion and contraction of the friction ring relative to the mounting portion upon heating and cooling of the rotor.

24. The rotor according to claim 23, wherein the mounting portion is a steel mounting portion, and wherein the joining means includes circumferentially disposed steel tabs extending from the mounting portion with ends cast into the friction ring.

25. The rotor according to claim 23, wherein the friction ring is one of a pair of friction rings, and wherein the joining means includes elements interconnecting the friction rings as well as slots, formed in a steel mounting ring including said annular mounting portion, within which said elements are slidable.

26. The rotor according to claim 23, wherein the friction ring, the mounting portion, and the joining means are integrally formed of cast iron.

27. The rotor according to claim 26, wherein the joining means is defined by a deformable portion of the rotor having at least one recurved section.

28. The rotor according to claim 23, wherein the friction ring is formed of cast iron and both the annular mounting portion and the joining means are formed of steel.

29. The rotor according to claim 28, wherein the joining means is pre-stressed in a direction to reduce stress as the friction ring expands during heating.

30. The rotor according to claim 29, wherein the joining means is pre-stressed in a radially inward direction before the friction ring is cast.

31. The rotor according to claim 23, wherein the joining means includes a bend facilitating radial expansion and contraction of the friction rings.
